(19) Europäisches Patentamt
European Patent Office
Office européen des brevets

(11) **EP 4 249 620 A1**

(12) **EUROPEAN PATENT APPLICATION**
published in accordance with Art. 153(4) EPC

(43) Date of publication:
**27.09.2023 Bulletin 2023/39**

(21) Application number: **21894991.5**

(22) Date of filing: **10.11.2021**

(51) International Patent Classification (IPC):
*C22C 38/00* (2006.01)      *C22C 38/02* (2006.01)
*C22C 38/04* (2006.01)      *C22C 38/06* (2006.01)
*C22C 38/12* (2006.01)      *C22C 38/14* (2006.01)
*C21D 9/46* (2006.01)       *C21D 8/02* (2006.01)
*C23C 2/06* (2006.01)

(52) Cooperative Patent Classification (CPC):
**C21D 8/02; C21D 9/46; C22C 38/00; C22C 38/02;
C22C 38/04; C22C 38/06; C22C 38/12;
C22C 38/14; C23C 2/06**

(86) International application number:
**PCT/KR2021/016320**

(87) International publication number:
**WO 2022/108220 (27.05.2022 Gazette 2022/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.11.2020  KR 20200153945**

(71) Applicant: **POSCO Co., Ltd
Pohang-si, Gyeongsangbuk-do 37859 (KR)**

(72) Inventors:
• **PARK, Kyong-Su
  Pohang-si, Gyeongsangbuk-do 37877 (KR)**
• **SON, Chang-Young
  Pohang-si, Gyeongsangbuk-do 37877 (KR)**

(74) Representative: **Meissner Bolte Partnerschaft
mbB
Patentanwälte Rechtsanwälte
Postfach 86 06 24
81633 München (DE)**

(54) **HIGH-STRENGTH HOT-ROLLED STEEL SHEET, HOT-ROLLED PLATED STEEL SHEET, AND MANUFACTURING METHODS THEREFOR**

(57)      A hot-rolled steel sheet according to one aspect of the present invention comprises, by wt%, 0.1-0.25% of carbon (C), 0.2-2.0% of manganese (Mn), 0.3% or less of silicon (Si), 0.05% or less of aluminum (Al), 0.05% or less of phosphorus (P), 0.03% or less of sulfur (S), 0.01% or less of nitrogen (N), 0.005-0.05% of titanium (Ti), 0.0005-0.005% of boron (B), 0.01% or less of niobium (Nb), 0.1% or less of molybdenum (Mo), 0.1% or less of vanadium (V), and the balance of iron (Fe) and inevitable impurities, comprises, in a microstructure, 55-90% of bainite and 10-45% of ferrite by volume fraction, the number per unit area of carbides having a major axis length of 25-500 nm from among carbides present in the bainite is $3*10^6$/mm2 or more, and the average aspect ratio (major axis/minor axis) of the carbides present in the bainite can be 2.0 or less.

[FIG. 1]

$5\mu m$

## Description

## Technical Field

The present disclosure relates to a high-strength hot-rolled steel sheet, a hot-rolled plated steel sheet, and a manufacturing method thereof, and more particularly, to a hot-rolled steel sheet having mechanical properties suitable for a material for steel construction, a hot-rolled plated steel sheet, and a manufacturing method thereof.

Background Art

A high-strength hot-rolled steel sheet and a hot-rolled plated steel sheet are mainly used in a structural material for support. In particular, the high-strength hot-rolled plated steel sheet has excellent deformation resistance and corrosion resistance, and is economically superior to a cold-rolled plated steel sheet, so it is widely used as a material for steel construction such as construction scaffolding, a greenhouse structural material, a solar panel support, and the like.

However, although there is an increasing demand for high strength and weight reduction of such hot-rolled steel sheet or hot-rolled plated steel sheet, a realistic solution has not been provided so far to provide a hot-rolled steel sheet or a hot-rolled plated steel sheet having suitable mechanical properties as a structural material.

Patent Documents 1 to 4 disclose techniques for securing strength of a steel sheet by precipitation hardening by adding an alloying element. In the techniques, a conventional manufacturing method of high strength low alloy (HSLA) steel is used, and alloy elements such as Ti, Nb, V, and Mo must be added. Therefore, since expensive alloy elements are necessarily added, it is undesirable in terms of manufacturing costs, and such alloy elements increase a rolling load, so there is a problem in that a thin material may not be manufactured.

Patent Documents 5 to 7 disclose techniques for securing strength by using a dual phase structure of ferrite and martensite or by utilizing a complex structure of ferrite, bainite, martensite, and retained austenite. However, ferrite and retained austenite have advantages in terms of workability but have disadvantages in terms of yield strength, and thus have technical difficulties in securing suitable strength as a structural material.

Therefore, there is an urgent need to develop a hot-rolled steel sheet or a hot-rolled plated steel sheet that can be thinned in terms of weight reduction, while having high-strength characteristics, suitable as a structural material for support.

[Prior art Document]

(Patent Document 1) Korean Patent Publication No. 10-2005-0113247 (published on December 1, 2005)
(Patent Document 2) Japanese Unexamined Patent Publication No. 2002-322542 (published on November 8, 2002)
(Patent Document 3) Japanese Unexamined Patent Publication No. 2006-161112 (published on June 22, 2006)
(Patent Document 4) Korean Patent Publication No. 10-2006-0033489 (published on April 19, 2006)
(Patent Document 5) Japanese Unexamined Patent Publication No. 2005-298967 (published on October 27, 2005)
(Patent Document 6) US Patent Publication No. 2005-0155673 (published on July 21, 2005)
(Patent Document 7) European Patent Publication No. 1396549 (published on March 10, 2004)

Summary of Invention

Technical Problem

According to an aspect of the present disclosure, a high-strength thin hot-rolled steel sheet and a hot-rolled plated steel sheet, and a manufacturing method therefor may be provided.

The subject of the present invention is not limited to the above. The subject of the present invention will be understood from the overall content of the present specification, and those of ordinary skill in the art to which the present invention pertains will have no difficulty in understanding the additional subject of the present invention.

Solution to Problem

According to an aspect of the present disclosure, a hot-rolled steel sheet includes, by wt%: 0.1 to 0.25% of carbon (C), 0.2 to 2.0% of manganese (Mn), 0.3% or less of silicon (Si), 0.05% or less of aluminum (Al), 0.05% or less of phosphorous (P), 0.03% or less of sulfur (S), 0.01% or less of nitrogen (N), 0.005 to 0.05% of titanium (Ti), 0.0005 to 0.005% of boron (B), 0.01% or less of niobium (Nb), 0.1% or less of molybdenum (Mo), 0.1% or less of vanadium (V), and a balance of iron (Fe) and inevitable impurities, includes 55 to 90% of bainite and 10 to 45% of ferrite as a microstructure, by volume fraction, wherein the number of carbides per unit area having a major axis length of 25 to 500 nm from among carbides present in the bainite may be $3*10^6$ /mm$^2$ or more, and an average aspect ratio (major axis/minor axis) of the carbides present in the bainite may be 2.0 or less.

The hot-rolled steel sheet may include, by volume fraction, at least one of 10% or less (including 0%) of pearlite, 1% or less (including 0%) of martensite, and 1% or less (including 0%) of retained austenite as a microstructure.

An average packet size of the bainite may be 50 to 200% of an average grain size of the ferrite.

The hot-rolled steel sheet may satisfy the following Relational expression 1.

[Relational expression 1]

$$30*[Ti]+100*[Nb]+5*[V] \leq 1.65$$

In Relational expression 1, [Ti], [Nb], and [V] refer to contents (wt%) of titanium (Ti), niobium (Nb), and vanadium (V) included in the hot-rolled steel sheet, respectively.

The hot-rolled steel sheet may further include, by weight, 0.2% or less of chromium (Cr).

The hot-rolled steel sheet may have bending workability (R/t) of 1.0 or less.

The hot-rolled steel sheet may have a yield strength (YS) of 550 MPa or more, and a tensile strength (TS) of 650 MPa or more.

The hot-rolled steel sheet may have a thickness of 3 mm or less (excluding 0 mm).

According to an aspect of the present disclosure, a hot-rolled plated steel sheet includes a base steel sheet and a plating layer formed on at least one surface of the base steel sheet, wherein the base steel sheet may be the hot-rolled steel sheet, and the plating layer may be any one plating layer selected from zinc, aluminum, a zinc-based alloy, or an aluminum-based alloy.

According to an aspect of the present disclosure, a method for manufacturing a hot-rolled steel sheet, may include: a slab heating operation of heating a slab, including by wt%, 0.1 to 0.25% of carbon (C), 0.2 to 2.0% of manganese (Mn), 0.3% or less of silicon (Si), 0.05% or less of aluminum (Al), 0.05% or less of phosphorous (P), 0.03% or less of sulfur (S), 0.01% or less of nitrogen (N), 0.005 to 0.05% of titanium (Ti), 0.0005 to 0.005% of boron (B), 0.01% or less of niobium (Nb), 0.1% or less of molybdenum (Mo), 0.1% or less of vanadium (V), and a balance of iron (Fe) and inevitable impurities; a hot rolling operation of hot rolling the heated slab at a rolling finish temperature ($T_{fm}$) satisfying the following Relational expression 3, to provide a steel sheet; a first cooling operation of cooling the hot-rolled steel sheet at a first cooling rate to a first cooling end temperature ($T_1$) satisfying the following Relational expression 4; a second cooling operation of cooling the first-cooled steel sheet at a second cooling rate of 50 to 500°C/s, faster than the first cooling rate to a second cooling end temperature ($T_2$) satisfying the following Relational expression 5; a third cooling operation of cooling the second-cooled steel sheet at a third cooling rate, slower than the second cooling rate to a third cooling end temperature ($T_3$) satisfying the following Relational expression 6; a coiling operation of coiling the third-cooled hot-rolled steel sheet at the third cooling end temperature ($T_3$); and a heat-treatment operation of heat treating the coiled steel sheet in a temperature range of 450 to 720°C,

[Relational expression 3]

$$T_{fm}(°C) \geq 800+3000*[Ti]+10000*[Nb]-20*t^{\wedge(1/2)}$$

In Relational expression 3, [Ti] and [Nb] refer to contents (wt%) of titanium (Ti) and niobium (Nb) included in the slab, respectively, and t refers to a thickness (mm) of the hot-rolled steel sheet.

[Relational expression 4]

$$T_{fm}(°C)-80°C \leq T_1(°C) \leq T_{fm}(°C)-5°C$$

In Relational expression 4, $T_{fm}$ refers to a rolling finish temperature ($T_{fm}$) of the hot rolling operation.

[Relational expression 5]

$$T_2(°C) \leq 750 - 270*[C] - 90*[Mn]$$

In Relational expression 5, [C] and [Mn] refer to contents (wt%) of carbon (C) and manganese (Mn) included in the slab, respectively.

[Relational expression 6]

$$540 - 423*[C] - 30.4*[Mn] \leq T_3(°C) < T_2(°C)$$

In Relational expression 6, $T_2$ refers to a second cooling end temperature ($T_2$) of the second cooling operation, and [C] and [Mn] refer to contents of carbon (C) and manganese (Mn) included in the slab, respectively (by weight %).
The first cooling rate may be 5 to 50°C/s, and the third cooling rate may be 5 to 50°C/s.
The slab may satisfy the following Relational expression 1.

[Relational expression 1]

$$30*[Ti] + 100*[Nb] + 5*[V] \leq 1.65$$

In Relational expression 1, [Ti], [Nb], and [V] refer to contents (wt%) of titanium (Ti), niobium (Nb), and vanadium (V) included in the slab, respectively.
The slab may further include, by weight, 0.2% or less of chromium (Cr).
The hot-rolled steel sheet may have a thickness of 3 mm or less.
According to an aspect of the present disclosure, a method for manufacturing a hot-rolled plated steel sheet includes: an operation of preparing a base steel sheet; and a plating operation of forming a plating layer on at least one surface of the base steel sheet by any one method selected from a hot-dip plating method, an electroplating method, and a plasma method, wherein the base steel sheet may be provided by the method for manufacturing the hot-rolled steel sheet, and the plating layer may be any one plating layer selected from zinc, aluminum, a zinc-based alloy, and an aluminum-based alloy.
The means for solving the above problems do not enumerate all the features of the present invention, and the various features of the present invention and the advantages and effects thereof will be understood in more detail with reference to the specific embodiments and examples below.

Advantageous Effects of Invention

As set forth above, according to an aspect of the present disclosure, it is possible to provide a hot-rolled steel sheet, a hot-rolled plated steel sheet, that can be thinned in terms of weight reduction while having high-strength characteristics suitable as a high-strength support structural material, and a method for manufacturing the same.
The effect of the present invention is not limited to the above, and may be interpreted to include matters that can be reasonably inferred from the matters described in this specification by those skilled in the art.

Brief description of drawings

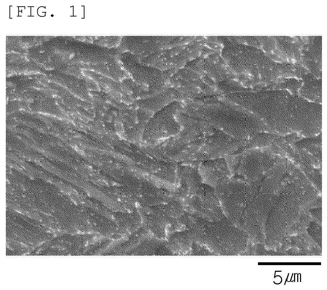

FIG. 1 is a photograph of a microstructure of specimen 1 observed with a scanning electron microscope (SEM).

Best Mode for Invention

The present disclosure relates to a hot-rolled steel sheet, a hot-rolled plated steel sheet, and a manufacturing method therefor. Hereinafter, preferred embodiments of the present disclosure will be described. Embodiments of the present disclosure may be modified in various forms, and the scope of the present disclosure should not be construed as being limited to the embodiments described below. These embodiments are provided to those skilled in the art to further elaborate the present disclosure.
Hereinafter, a hot-rolled steel sheet according to the present disclosure will be described in more detail.
According to an aspect of the present disclosure, a hot-rolled steel sheet includes, by wt%: 0.1 to 0.25% of carbon (C), 0.2 to 2.0% of manganese (Mn), 0.3% or less of silicon (Si), 0.05% or less of aluminum (Al), 0.05% or less of phosphorous (P), 0.03% or less of sulfur (S), 0.01% or less of nitrogen (N), 0.005 to 0.05% of titanium (Ti), 0.0005 to 0.005% of boron (B), 0.01% or less of niobium (Nb), 0.1% or less of molybdenum (Mo), 0.1% or less of vanadium (V), and a balance of iron (Fe), and inevitable impurities, includes 55 to 90% of bainite and 10 to 45% of ferrite as a microstructure, by volume fraction, wherein the number of carbides per unit area having a major axis length of 25 to 500 nm from among carbides present in the bainite may be $3*10^6$ /mm$^2$ or more, and an average aspect ratio (major axis/minor axis) of the carbides present in the bainite may be 2.0 or less.

Hereinafter, a steel composition included in the base iron of the present disclosure will be described in more detail. Hereinafter, % represents a content of each element based on weight, unless otherwise specified.

According to an aspect of the present disclosure, the hot-rolled steel sheet may include, by wt%: 0.1 to 0.25% of carbon (C), 0.2 to 2.0% of manganese (Mn), 0.3% or less of silicon (Si), 0.05% or less of aluminum (Al), 0.05% or less of phosphorous (P), 0.03% or less of sulfur (S), 0.01% or less of nitrogen (N), 0.005 to 0.05% of titanium (Ti), 0.0005 to 0.005% of boron (B), 0.01% or less of niobium (Nb), 0.1% or less of molybdenum (Mo), 0.1% or less of vanadium (V), and a balance of iron (Fe), and inevitable impurities, and may further include 0.2% by weight or less of chromium (Cr).

Carbon (C): 0.1 to 0.25%

Carbon (C) is an element effectively contributing to improving strength of a steel sheet. In addition, carbon (C) is also an element requiring proper addition in order to secure a microstructure to be implemented in the present disclosure. Therefore, in order to secure a desired level of strength and a desired level of bainite fraction during cooling after hot rolling, in the present disclosure, 0.1% or more of carbon (C) may be added. Preferably, a lower limit of a content of carbon (C) may be 0.12%, and more preferably, a lower limit of the content of carbon (C) may be 0.14%. However, when carbon (C) is excessively added, a large amount of carbides may be formed and formability may be deteriorated, or when used for steel building materials, weldability may be deteriorated, so that in the present disclosure, the content of carbon (C) may be limited to 0.25% or less. Preferably, an upper limit of the content of carbon (C) may be 0.24%, and more preferably, an upper limit of the content of carbon (C) may be 0.23%.

Manganese (Mn): 0.2 to 2.0%

Manganese (Mn) is not only an element improving strength and hardenability of steel, but also an element effectively contributing to suppressing cracks caused by sulfur (S) by combining with sulfur (S), which is inevitably contained during a manufacturing process of steel, to form Mns. Therefore, in the present disclosure, 0.2% or more of manganese (Mn) may be included. Preferably, a lower limit of a content of manganese (Mn) may be 0.3%, and more preferably, a lower limit of the content of manganese (Mn) may be 0.4%. However, when manganese (Mn) is excessively added, not only weldability is deteriorated, but also it is undesirable in terms of economics, so in the present disclosure, the content of manganese (Mn) may be limited to 2.0% or less. Preferably, an upper limit of the content of manganese (Mn) may be 1.9%, and more preferably, an upper limit of the content of manganese (Mn) may be 1.8%.

Silicon (Si): 0.3% or less

Since silicon (Si) is an element not only acting as a deoxidizer, but also effectively contributing to improving strength of a steel sheet, in the present disclosure, silicon (Si) may be added to achieve such an effect. Preferably, a lower limit of a content of silicon (Si) may be 0.01%, and more preferably, a lower limit of the content of silicon (Si) may be 0.02%. However, when the content of silicon (Si) exceeds a certain level, surface quality may deteriorate due to scale formed on a surface of the steel sheet and weldability may deteriorate, so in the present disclosure, the content of silicon (Si) may be limited to 0.3% or less. Preferably, an upper limit of the content of silicon (Si) may be 0.2%, and more preferably, an upper limit of the content of silicon (Si) may be 0.1%.

Aluminum (Al): 0.05% or less

Aluminum (Al) is an element acting as a deoxidizer by combining with oxygen in steel, and in the present disclosure, aluminum (Al) may be added for this effect. Preferably, a lower limit of a content of aluminum (Al) may be 0.005%, and more preferably, a lower limit of the content of aluminum (Al) may be 0.01%. However, when aluminum (Al) is excessively added, inclusions of a steel sheet may increase and workability of the steel sheet may be deteriorated. Therefore, in the present disclosure, the content of aluminum (Al) may be limited to 0.05% or less. Preferably, an upper limit of the content of aluminum (Al) may be 0.04%.

Phosphorous (P): 0.05% or less

Phosphorus (P) is an impurity element that is inevitably contained in steel, and is an element that is incorporated in grain boundaries to reduce toughness of steel. Therefore, it is preferable to control a content of phosphorus (P) to be as low as possible, and it is advantageous to limit the theoretical content of phosphorus (P) to 0%. However, in consideration of the content of phosphorous (P) that is inevitably contained in the manufacturing process, in the present disclosure, the content of phosphorus (P) may be limited to 0.05% or less. Preferably, an upper limit of a content of phosphorous (P), and more preferably, an upper limit of the content of phosphorus (P) may be 0.03%.

Sulfur (S): 0.03% or less

Sulfur (S) is an impurity that is inevitably contained in steel, and is an element reacting with manganese (Mn) to form MnS to increase a content of precipitates and embrittle the steel. Therefore, it is preferable to control the content as low as possible, and theoretically, it is advantageous to limit the content of sulfur (S) to 0%. However, considering the content of sulfur (S) inevitably contained in the manufacturing process, in the present disclosure, the content of sulfur (S) may be limited to 0.03% or less. Preferably, an upper limit of the content of sulfur (S) may be 0.02%, and more preferably, an upper limit of the content of sulfur (S) may be 0.01%.

Nitrogen (N): 0.01% or less

Nitrogen (N)is an impurity inevitably contained in steel, and is an element causing cracks in a slab by forming nitrides during continuous casting. Therefore, it is desirable to control a content of nitrogen (N) to be as low as possible, and theoretically, it is advantageous to limit the content of nitrogen (N) to 0%. However, in consideration of the content unavoidably contained in the manufacturing process, in the present disclosure, the content of nitrogen (N) may be limited to 0.01% or less. Preferably, a content of nitrogen (N) may be 0.008% or less, and more preferably, the content of nitrogen (N) may be 0.006% or less.

Titanium (Ti): 0.005 to 0.05%

Titanium (Ti) is an element forming carbides and nitrides by combining with carbon (C) or nitrogen (N). In the present disclosure, boron (B) was added to secure hardenability. In this case, since titanium (Ti) is combined with nitrogen (N) before boron (B) is combined with nitrogen (N), an addition effect of boron (B) may be improved. In the present disclosure, 0.005% or more of titanium (Ti) may be added to achieve the same effect. Preferably, a lower limit of a content of titanium (Ti) may be 0.01%, and more preferably, a lower limit of the content of titanium (Ti) may be 0.015%. However, when titanium (Ti) is excessively added, it may cause deterioration in casting in the slab manufacturing operation, and a rolling load may be increased during hot rolling, it may cause deterioration in rolling properties. Therefore, in the present disclosure, a content of titanium (Ti) may be limited to 0.05% or less. Preferably, a lower limit of the content of titanium (Ti) may be 0.04%, and more preferably, a lower limit of the content of titanium (Ti) may be 0.03%.

Boron (B): 0.0005 to 0.005%

Boron (B) is an element playing an important role in improving hardenability of a steel sheet, and is an element suppressing transformation of ferrite or pearlite during cooling after completion of rolling. In the present disclosure, 0.0005% or more of boron (B) may be added to achieve such an effect. Preferably, a lower limit of a content of boron (B) may be 0.0007%, and more preferably, a lower limit of the content of boron (B) may be 0.001%. However, when an amount of boron (B) added exceeds a certain level, there is a problem in that the excessively added boron (B) combines with iron (Fe) to make a grain boundary vulnerable. In the present disclosure, the content of boron (B) may be limited to 0.005% or less. Preferably, an upper limit of the content of boron (B) may be 0.004%, and more preferably, an upper limit of the content of boron (B) may be 0.003%.

Niobium (Nb): 0.01% or less, Molybdenum (Mo): 0.1% or less, Vanadium (V): 0.1% or less

Niobium (Nb), molybdenum (Mo), and vanadium (V) are elements reacting with carbon (C) or nitrogen (N) to form precipitates such as carbides and nitrides. However, these are expensive elements that not only increase in price as an amount added increases, but also increase a rolling load during hot rolling, making it difficult to manufacture thin materials. Therefore, in the present disclosure, the addition of niobium (Nb), molybdenum (Mo) and vanadium (V) may be suppressed, and even if they are inevitably added, contents of niobium (Nb), molybdenum (Mo) and vanadium (V) may be reduced to 0.01% or less, 0.1% or less, or 0.01% or less, respectively. Preferably, upper limits of contents of niobium (Nb) and molybdenum (Mo) may be 0.005% and 0.01%, respectively. The contents of niobium (Nb), molybdenum (Mo), and vanadium (V) may be 0%, respectively, and a lower limit thereof may be 0.0005%, respectively.

Meanwhile, the contents of titanium (Ti), niobium (Nb), and vanadium (V), forming precipitates and reducing rolling property, preferably satisfy the following Relational expression 1.

$$[\text{Relational expression 1}]$$

$$30*[\text{Ti}]+100*[\text{Nb}]+5*[\text{V}]\leq 1.65$$

In Relational expression 1, [Ti], [Nb], and [V] refer to the contents (wt%) of titanium (Ti), niobium (Nb), and vanadium (V) included in the hot-rolled steel sheet, respectively.

Relational expression 1 is a condition for providing a thin steel sheet having high strength properties and high formability properties. That is, when the contents of titanium (Ti), niobium (Nb), and vanadium (V) do not satisfy Relational expression 1, hot rolling should be inevitably performed at a high temperature to manufacture thin materials, and an aspect ratio of carbides (major axis / minor axis) may exceed a desired level, resulting in poor bending workability (R/t).

Chromium (Cr): 0.2 wt% or less

Since chromium (Cr) is an element contributing to improving hardenability of steel, in the present disclosure, chromium (Cr) may be selectively added to achieve this effect. However, since chromium (Cr) is an expensive element, excessive addition is not preferable from an economic point of view, and excessive addition of chromium (Cr) may cause deterioration in weldability. Thus, in the present disclosure, a content of chromium (Cr) may be limited to 0.2% or less. Preferably, an upper limit of the content of chromium (Cr) may be 0.15%, and more preferably, an upper limit of the content of chromium (Cr) may be 0.1%.

Other than the above-described steel composition, the hot-rolled steel sheet according to an aspect of the present disclosure may include a balance of Fe and other inevitable impurities. The inevitable impurities may be unintentionally incorporated from raw materials or surrounding environments in a general manufacturing process and cannot be completely excluded. Since these impurities may be known to a person skilled in the art, all of them are not specifically mentioned in the present specification. In addition, additional addition of effective components other than the above-mentioned component is not completely excluded.

A microstructure of the hot-rolled steel sheet according to an aspect of the present disclosure may include 55 to 90% by volume of bainite and 10 to 45% by volume of ferrite, and may further include at least one of 10 vol% or less (including 0%) of pearlite, 1 vol% or less (including 0%) of martensite, and 1 vol% or less (including 0%) of residual austenite.

Bainite is a microstructure effective for increasing strength, and ferrite is a microstructure effective for securing ductility, and the fractions of bainite and ferrite need to be appropriately controlled in terms of securing both high strength characteristics and excellent formability. Therefore, in the present disclosure, the fraction of bainite may be controlled in a range of 55 to 90% by volume, and the fraction of ferrite can be controlled in a range of 10 to 45% by volume.

In addition, the hot-rolled steel sheet of the present disclosure may include one or more of pearlite, martensite, retained austenite, and other precipitates as a microstructure, but a fraction thereof may be limited to a certain range or less in terms of securing both high strength characteristics and excellent formability. When a large amount of pearlite is formed, formability is lowered due to formation of a composite structure or a fraction of bainite is reduced, making it difficult to secure strength. Therefore, in the present disclosure, a fraction of pearlite may be limited to 10% by volume or less (including 0%). Since martensite is advantageous in terms of securing strength but disadvantageous in terms of securing formability, in the present disclosure, a fraction of martensite may be limited to 1% or less (including 0%). Retained austenite is advantageous in terms of securing formability but disadvantageous in terms of securing yield strength, so a fraction of retained austenite may be limited to 1% or less (including 0%) in the present disclosure.

The number of carbides per unit area of having a major axis of 25 to 500 nm, from among carbides present in bainite, is preferably $3*10^6/mm^2$ or more. Among carbides present in bainite, carbides having an excessively small particle size increase a rolling load during hot rolling, making it difficult to roll thin materials, and carbides having an excessively large particle size may adversely affect strength and ductility. In addition, it is preferable that the number of carbides present in bainite is a certain amount or more in order to secure strength. Therefore, in the hot-rolled steel sheet of the present disclosure, the number of carbides per unit area having a major axis of 25 to 500 nm, from among carbides present in bainite, may be controlled to $3*10^6/mm^2$ or more.

A shape of the carbides present in bainite is also a factor greatly affecting formability of a steel sheet, and the closer the shape of the carbides present in bainite is to a spherical shape, the more advantageous it is to secure the formability of the steel sheet. Therefore, in the present disclosure, an average aspect ratio (major axis/minor axis) of carbides present in bainite may be limited to 2.0 or less in terms of securing the formability.

Meanwhile, as a difference in size between bainite and ferrite increases, it is not preferable in terms of formability, so in the hot-rolled steel sheet of the present disclosure, the average packet size of bainite may be controlled to a level of 50 to 200% of the average grain size of ferrite.

The hot-rolled steel sheet according to an aspect of the present disclosure may be a thin material having a thickness of 3 mm or less (excluding 0 mm), a yield strength (YS) of 550 MPa or more, a tensile strength (TS) of 650 MPa or more, and bending workability (R/t) of 1.0 or less.

In the hot-rolled steel sheet according to an aspect of the present disclosure, a yield strength and thickness of the steel sheet may satisfy the following Relational expression 2, to meet the purpose of weight reduction due to high strength and thinning.

[Relational expression 2]

$$YS-100*t \geq 350$$

In Relational expression 2, YS refers to a yield strength (MPa) of the hot-rolled steel sheet, and t refers to a thickness (mm) of the hot-rolled steel sheet.

Meanwhile, the hot-rolled steel sheet according to an aspect of the present disclosure may be a hot-rolled plated steel sheet having a plating layer on at least one surface. Components of the plating layer provided in the hot-rolled plated steel sheet of the present disclosure are not particularly limited, and may be any one plating layer selected from zinc, aluminum, a zinc-based alloy, and an aluminum-based alloy, as a non-limiting example. In addition, as a non-limiting example, the zinc-based alloy plating layer may be a plating layer including at least one selected from among aluminum (Al), magnesium (Mg), nickel (Ni), and iron (Fe), and a balance of zinc (Zn), and the aluminum-based alloy plating layer may be a plating layer including at least one selected from among silicon (Si), magnesium (Mg), nickel (Ni), and iron (Fe), and a balance of aluminum (Al).

Hereinafter, a method for manufacturing a high-strength hot-rolled steel sheet according to an aspect of the present disclosure will be described in more detail.

According to another aspect of the present disclosure, a method for manufacturing a hot-rolled steel sheet, may include: a slab heating operation of heating a slab including by wt%, 0.1 to 0.25% of carbon (C), 0.2 to 2.0% of manganese (Mn), 0.3% or less of silicon (Si), 0.05% or less of aluminum (Al), 0.05% or less of phosphorous (P), 0.03% or less of sulfur (S), 0.01% or less of nitrogen (N), 0.005 to 0.05% of titanium (Ti), 0.0005 to 0.005% of boron (B), 0.01% or less of niobium (Nb), 0.1% or less of molybdenum (Mo), 0.1% or less of vanadium (V), and a balance of iron (Fe) and inevitable impurities; a hot rolling operation of hot rolling the heated slab at a rolling finish temperature ($T_{fm}$) satisfying the following Relational expression 3, to provide a steel sheet; a first cooling operation of cooling the hot-rolled steel sheet at a first cooling rate to a first cooling end temperature ($T_1$) satisfying the following Relational expression 4; a second cooling operation of cooling the first-cooled steel sheet at a second cooling rate of 50 to 500°C/s, faster than the first cooling rate to a second cooling end temperature ($T_2$) satisfying the following Relational expression 5; a third cooling operation of cooling the second-cooled steel sheet at a third cooling rate, slower than the second cooling rate to a third cooling end temperature ($T_3$) satisfying the following Relational expression 6; a coiling operation of coiling the third-cooled hot-rolled steel sheet at the third cooling end temperature ($T_3$); and a heat treatment operation of heat treating the wound steel sheet in a temperature range of 450 to 720°C.

[Relational expression 3]

$$T_{fm}(°C) \geq 800+3000*[Ti]+10000*[Nb]-20*t^{(1/2)}$$

In Relational expression 3, [Ti] and [Nb] refer to contents (wt%) of titanium (Ti) and niobium (Nb) included in the slab, respectively, and t refers to a thickness (mm) of the hot-rolled steel sheet.

[Relational expression 4]

$$T_{fm}(°C)-80°C \leq T_1(°C) \leq T_{fm}(°C)-5°C$$

In Relational expression 4, $T_{fm}$ refers to a rolling finish temperature ($T_{fm}$) of the hot rolling operation.

[Relational expression 5]

$$T_2(°C) \leq 750-270*[C]-90*[Mn]$$

In Relational expression 5, [C] and [Mn] refer to contents (% by weight) of carbon (C) and manganese (Mn) included in the slab, respectively.

[Relational expression 6]

$$540-423*[C]-30.4*[Mn] \leq T_3(°C) \leq T_2(°C)$$

In Relational expression 6, $T_2$ refers to a second cooling end temperature ($T_2$) of the second cooling operation, and [C] and [Mn] refer to contents (% by weight) of carbon (C) and manganese (Mn) included in the slab, respectively.

Preparing and heating steel slab

A steel slab having a predetermined component is prepared. Since the steel slab of the present disclosure has an alloy composition corresponding to that of the above-described hot-rolled steel sheet, the description of the alloy composition of the steel slab is replaced with the description of the above-described alloy composition of the hot-rolled steel sheet.

The prepared steel slab may be heated to a certain temperature range, and in this case, a heating method and heating temperature of the steel slab are not particularly limited. As an example, the heating temperature of the steel slab may be in a range of 1100 to 1350°C. When the heating temperature of the steel slab is less than 1100°C, the steel slab may be hot-rolled in a temperature range below a target finish hot rolling temperature range, and when the heating temperature of the steel slab exceeds 1350°C, additional costs may be incurred due to excessive input of energy, or scale may be formed thickly on a surface layer of the slab.

Hot rolling

Hot rolling may be performed after heating a steel slab to provide a hot-rolled steel sheet having a thickness of 3 mm or less (excluding 0 mm) . If a temperature of the heated steel slab is a temperature at which normal hot rolling may be performed, hot rolling may be performed as it is without particularly performing reheating the steel slab, and if the temperature of the heated steel slab is lower than the temperature at which normal hot rolling may be performed, hot rolling may be performed after reheating the steel slab.

In this case, an finish temperature ($T_{fm}$) of hot rolling during hot rolling preferably satisfies the following Relational expression 3. When a rolling temperature is excessively low, a rolling load increases, so that rolling properties may be reduced, or surface roughness due to rolling roll fatigue may be caused, as well as there may be a possibility that an aspect ratio of carbides may deviate from the desired level due to low-temperature rolling.

[Relational expression 3]

$$T_{fm}(°C) \geq 800+3000*[Ti]+10000*[Nb]-20*t^{(1/2)}$$

In Relational expression 3, [Ti] and [Nb] refer to contents (wt%) of titanium (Ti) and niobium (Nb) included in the slab, respectively, and t refers to a thickness (mm) of the hot-rolled steel sheet.

First cooling

The hot-rolled steel sheet may be cooled at a first cooling rate ($V_{C1}$) to a first cooling end temperature ($T_1$) satisfying the following relational expression 4.

[Relational expression 4]

$$T_{fm}(°C)-80°C≤T_1(°C)≤T_{fm}(°C)-5°C$$

In Relational expression 4, $T_{fm}$ refers to a rolling finish temperature ($T_{fm}$) of the hot rolling operation.

When the first cooling end temperature ($T_1$) is below a certain level, transformation into ferrite or pearlite occurs, so that a desired microstructure of the present disclosure may not be secured, and accordingly, there may be a concern that a desired level of strength may not be secured. Therefore, in the present disclosure, a lower limit of the first cooling end temperature ($T_1$) may be limited to $T_{fm}$(°C)-80°C. In addition, when the first cooling end temperature ($T_1$) exceeds a certain level, there may be a possibility that a difference between an average packet size of bainite and an average grain size of ferrite becomes excessively large because an austenite grain becomes coarse and non-uniform, so that in the present disclosure, an upper limit of the first cooling end temperature ($T_1$) may be limited to $T_{fm}$(°C)-5°C.

The first cooling rate ($V_{C1}$) may be a cooling rate applied to normal slow cooling, but may be limited to a range of 5 to 50°C/s in terms of preventing steel plate shape defects and securing a desired microstructure.

Second cooling

The first-cooled steel sheet may be cooled at a second cooling rate ($V_{C2}$) to a second cooling end temperature ($T_2$) satisfying the following Relational expression 5.

[Relational expression 5]

$$T_2(°C)≤750-270*[C]-90*[Mn]$$

In Relational expression 5, [C] and [Mn] refer to contents (wt%) of carbon (C) and manganese (Mn) included in the slab, respectively.

When the second cooling end temperature ($T_2$) exceeds a certain level, transformation to ferrite or pearlite occurs, so that a desired microstructure of the present disclosure may not be secured, and accordingly, there may be a concern that a desired level of strength may not be secured. Accordingly, in the present disclosure, an upper limit of the second cooling end temperature ($T_2$) may be limited to 750-270*[C]-90*[Mn].

The second cooling may be preferably performed at a faster rate than the first cooling, and a more preferable second cooling rate ($V_{C2}$) may be in a range of 50 to 500°C/s. When the second cooling rate ($V_{C2}$) is less than 50°C/s, transformation into ferrite or pearlite increases, which may cause a decrease in strength. In addition, since additional equipment is required to implement a cooling rate of exceeding 500°C/s, it is not preferable in terms of economics.

Third cooling and coiling

The second-cooled steel sheet may be cooled at a third cooling rate (Vcs) to a third cooling end temperature ($T_3$) satisfying the following Relational expression 6, and then coiled at the cooling end temperature ($T_3$).

[Relational expression 6]

$$540-423*[C]-30.4*[Mn]≤T_3(°C)<T_2(°C)$$

In Relational expression 6, $T_2$ refers to a second cooling end temperature ($T_2$) of the second cooling operation, and [C] and [Mn] refer to contents of carbon (C) and manganese (Mn) included in the slab, respectively (by weight %).

The third cooling is a cooling operation for controlling a coiling temperature, and cooling may be performed at a third cooling rate ($V_{cs}$), slower than the second cooling rate ($V_{C2}$) to a third cooling end temperature($T_3$), lower than the second cooling end temperature ($T_2$). A preferred third cooling rate ($V_{C3}$) may be in a range of 5 to 50°C/s.

However, when the third cooling end temperature($T_3$) is excessively low, since a low-temperature structure may be excessively formed, so that it is impossible to secure the desired microstructure and formability, a lower limit of the third cooling end temperature($T_3$) may be limited to 540-423*[C]-30.4*[Mn].

Heat treatment

A heat treatment may be performed by raising a temperature of the coiled steel sheet and then maintain the temperature. The heat treatment may be performed in a temperature range of 450 to 720°C, in order to secure a temperature of the steel sheet and secure stable carbides in a subsequent plating process.

Plating

After a heat treatment, a plating layer may be formed on at least one surface of the heat-treated steel sheet. A composition and formation method of the plating layer of the present disclosure are not particularly limited, and may be interpreted as a concept including the composition and formation method of a plating layer commonly provided on a hot-rolled plated steel sheet. As an example, the plating layer may be formed by any one method selected from a hot-dip plating method, an electroplating method, and a plasma method, and the plating layer may be any one plating layer material selected from zinc, aluminum, zinc-based alloy, and aluminum-based alloy.

The hot-rolled steel sheet provided by the above-described manufacturing method may include 55 to 90% by volume of bainite and 10 to 45% by volume of ferrite as a microstructure, and may further include one or more of 10 vol% or less (including 0%) of pearlite, 1 vol% or less (including 0%) of martensite, and 1 vol% or less (including 0%) of retained austenite. The number of carbides per unit area having a major axis of 25 to 500 nm, among carbides present in the bainite may be $3*10^6$ /mm$^2$ or more, and an average ratio (major axis/minor axis) of the carbides present in the bainite may be 2.0 or less. In addition, in the hot-rolled steel sheet provided by the above-described manufacturing method, an average packet size of bainite may be 50 to 200% of an average grain size of ferrite.

The hot-rolled steel sheet provided by the above-described manufacturing method may have a thickness of 3 mm or less (excluding 0 mm), and satisfy a yield strength (YS) of 550 MPa or more, a tensile strength (TS) of 650 MPa or more, and bending workability (R/t) of 1.0 or less. In addition, the yield strength and thickness of the hot-rolled steel sheet provided by the above-described manufacturing method may satisfy the following Relational expression 2.

$$[Relational\ expression\ 2]$$

$$YS-100*t\geq350$$

In Relational expression 2, YS refers to a yield strength (MPa) of the hot-rolled steel sheet, and t refers to a thickness (mm) of the hot-rolled steel sheet.

Mode for Invention

Hereinafter, a high-strength hot-rolled steel sheet of the present disclosure and a manufacturing method therefor will be described in more detail through specific examples. It should be noted that the following examples are only for understanding of the present invention, and are not intended to specify the scope of the present invention. The scope of the present invention may be determined by the matters described in the claims and the matters reasonably inferred therefrom.

(Example)

A hot-rolled steel sheet was manufactured by applying the process conditions of Table 2 to a steel slab having the alloy composition of Table 1 below. In Table 1, a remainder thereof is iron (Fe) and inevitable impurities, and a steel slab heating condition of 1200°C was commonly applied.

[Table 1]

| STEEL TYPE | ALLOY COMPOSITION (WEIGHT %) | | | | | | | | | | | | | |
|---|---|---|---|---|---|---|---|---|---|---|---|---|---|---|
| | C | Mn | Si | Al | N | P | S | Cr | Ti | Nb | V | Mo | B | RELATIONAL EXPRESSION 1 |
| A | 0.156 | 1.10 | 0.07 | 0.036 | 0.004 | 0.015 | 0.004 | 0.02 | 0.020 | 0.002 | 0.002 | 0.002 | 0.0018 | 0.81 |
| B | 0.154 | 1.08 | 0.08 | 0.035 | 0.005 | 0.010 | 0.004 | 0.02 | 0.019 | 0.001 | 0.003 | 0.002 | 0.0014 | 0.69 |
| C | 0.217 | 1.00 | 0.08 | 0.034 | 0.003 | 0.007 | 0.002 | 0.02 | 0.020 | 0.002 | 0.003 | 0.006 | 0.0016 | 0.82 |
| D | 0.159 | 1.78 | 0.06 | 0.033 | 0.003 | 0.012 | 0.003 | 0.02 | 0.019 | 0.001 | 0.001 | 0.002 | 0.0020 | 0.68 |
| E | 0.156 | 0.52 | 0.07 | 0.030 | 0.002 | 0.009 | 0.003 | 0.02 | 0.025 | 0.001 | 0.002 | 0.003 | 0.0015 | 0.86 |
| F | 0.031 | 1.01 | 0.08 | 0.033 | 0.004 | 0.012 | 0.002 | 0.02 | 0.019 | 0.002 | 0.001 | 0.003 | 0.0019 | 0.78 |
| G | 0.341 | 1.03 | 0.08 | 0.033 | 0.003 | 0.010 | 0.003 | 0.03 | 0.024 | 0.001 | 0.001 | 0.003 | 0.0016 | 0.83 |
| H | 0.147 | 1.03 | 0.07 | 0.034 | 0.003 | 0.013 | 0.004 | 0.02 | 0.001 | 0.001 | 0.002 | 0.002 | 0.0021 | 0.14 |
| I | 0.153 | 1.02 | 0.06 | 0.034 | 0.004 | 0.015 | 0.003 | 0.03 | 0.022 | 0.001 | 0.001 | 0.002 | 0.0002 | 0.77 |
| J | 0.154 | 1.01 | 0.08 | 0.033 | 0.003 | 0.014 | 0.004 | 0.02 | 0.020 | 0.021 | 0.001 | 0.002 | 0.0020 | 2.71 |
| K | 0.156 | 0.99 | 0.07 | 0.033 | 0.003 | 0.011 | 0.003 | 0.02 | 0.019 | 0.015 | 0.019 | 0.002 | 0.0017 | 2.17 |

[Table 2]

| SPECIMEN No. | STEEL TYPE | ROLLING THICKNESS (mm) | ROLLING FINISH TEMPERATURE $T_{fm}$ (°C) | FIRST COOLING RATE $V_{C1}$ (°C/s) | FIRST COOLING END TEMPERATURE $T_1$ (°C) | SECOND COOLING RATE $V_{C2}$ (°C/s) | SECOND COOLING END TEMPERATURE $T_2$ (°C) | THIRD COOLING RATE $V_{C3}$ (°C/s) | THIRD COOLING END TEMPERATURE $T_3$ (°C) | HEAT-TREATMENT TEMPERATURE (°C) |
|---|---|---|---|---|---|---|---|---|---|---|
| 1 | A | 1.4 | 899 | 25 | 851.5 | 100 | 577 | 30 | 521 | 557 |
| 2 | A | 2.2 | 911 | 25 | 873.5 | 100 | 551 | 30 | 513 | 574 |
| 3 | A | 2.8 | 918 | 25 | 870.5 | 100 | 596 | 30 | 498 | 573 |
| 4 | A | 1.8 | 868 | 25 | 838 | 100 | 599 | 30 | 508 | 569 |
| 5 | A | 1.8 | 931 | 25 | 893.5 | 100 | 554 | 30 | 514 | 579 |
| 6 | A | 1.8 | 907 | 25 | 829.5 | 100 | 588 | 30 | 537 | 596 |
| 7 | A | 1.8 | 904 | 25 | 864 | 100 | 597 | 30 | 467 | 594 |
| 8 | A | 1.8 | 904 | 25 | 874 | 100 | 607 | 30 | 598 | 547 |
| 9 | A | 1.8 | 909 | 25 | 886.5 | 100 | 580 | 30 | 593 | 610 |
| 10 | B | 1.8 | 919 | 25 | 881.5 | 100 | 552 | 30 | 518 | 599 |
| 11 | C | 1.8 | 885 | 25 | 850 | 100 | 557 | 30 | 512 | 567 |
| 12 | D | 1.8 | 883 | 25 | 858 | 100 | 545 | 30 | 520 | 609 |
| 13 | E | 1.8 | 906 | 25 | 883.5 | 100 | 554 | 30 | 517 | 602 |
| 14 | A | 1.8 | 905 | 25 | 732.5 | 100 | 590 | 30 | 584 | 578 |
| 15 | A | 1.8 | 845 | 25 | 795 | 300 | 552 | 30 | 508 | 584 |
| 16 | A | 1.8 | 888 | 25 | 843 | 100 | 550 | 30 | 396 | 580 |
| 17 | A | 1.8 | 918 | 25 | 893 | 100 | 677 | 30 | 643 | 554 |
| 18 | A | 1.8 | 910 | 25 | 872.5 | 30 | 574 | 30 | 562 | 610 |
| 19 | A | 1.8 | 910 | 25 | 872.5 | 100 | 647 | 30 | 566 | 548 |
| 20 | A | 1.8 | 893 | 25 | 860.5 | 100 | 580 | 30 | 566 | 745 |
| 21 | F | 1.8 | 890 | 25 | 842.5 | 100 | 570 | 30 | 506 | 601 |
| 22 | G | 1.8 | 918 | 25 | 893 | 100 | 599 | 30 | 510 | 553 |

EP 4 249 620 A1

(continued)

| S P E C I M E N No. | STEEL TYPE | ROLLING THICKNESS (mm) | ROLLING FINISH TEMPERATURE $T_{fm}$ (°C) | FIRST COOLING RATE $V_{C1}$ (°C/s) | FIRST COOLING END TEMPERATURE $T_1$ (°C) | SECOND COOLING RATE $V_{C2}$ (°C/s) | SECOND COOLING END TEMPERATURE $T_2$ (°C) | THIRD COOLING RATE $V_{C3}$ (°C/s) | THIRD COOLING END TEMPERATURE $T_3$ (°C) | HEAT-TREATMENT TEMPERATURE (°C) |
|---|---|---|---|---|---|---|---|---|---|---|
| 23 | H | 1.8 | 899 | 25 | 859 | 100 | 557 | 30 | 504 | 562 |
| 24 | I | 1.8 | 902 | 25 | 877 | 100 | 588 | 30 | 515 | 573 |
| 25 | J | 1.8 | 907 | 25 | 887 | 100 | 563 | 30 | 506 | 598 |
| 26 | K | 1.8 | 888 | 25 | 843 | 100 | 562 | 30 | 517 | 555 |

Thereafter, a microstructure of each specimen was observed and mechanical properties were measured and described in Table 3.

After each specimen was cut in a direction, parallel to a rolling direction, a specimen for observing a microstructure was taken from a cutting surface at a point of a plate thickness. After polishing the collected sample and corroding the same with a nital solution, the microstructure of each specimen was observed using an optical microscope and a scanning electron microscope (SEM). A microstructure fraction was measured through image analysis. An average size of bainite packets and an average size of ferrite grains were measured using electron backscatter diffraction (EBSD) at a point of 1/4 of the plate thickness. The average size of the bainite packets was measured by defining a position exceeding 15° of an orientation difference as a grain boundary, and the average size of the ferrite grains was measured using a linear intercept method. In Table 3, F refers to ferrite, P refers to pearlite, B refers to bainite, M refers to martensite, and R-$\gamma$ refers to retained austenite. At least 5 electron microscope images of bainite present in different regions of each sample were obtained by increasing a magnification of the scanning electron microscope (SEM) to 5000 times, and a square region of 20um in width and 20um in height was calculated on each of the obtained image, to measure a size, number density, and an average aspect ratio of carbides. In Table 3, the number density of carbides refers to the number density of carbides having a major axis of 25 to 500 nm.

Tensile strength and yield strength were measured by performing a tensile test in an L direction using a DIN standard for each specimen. Bending workability (R/t) was measured by applying a 90° V-bending bending test. After bending the specimen by 90° with a V-shaped jig having different curvatures (R), the presence or absence of cracks in the bent portion was checked and measured.

[Table 3]

| SPECIMEN No. | STEEL TYPE | MICROSTRUCTURE FRACTION (VOLUME%) | | | | | CARBIDE IN BAINITE | | AVERAGE SIZE OF B PACKET (μm) | AVERAGE SIZE OF F GRAINS (μm) | BENDING WORKABILITY (R/t) | TENSILE STRENGTH (MPa) | YIELD STRENGTH (MPa) |
|---|---|---|---|---|---|---|---|---|---|---|---|---|---|
| | | F | P | B | M | R-γ | NUMBER OF DENSITY OF CARBIDES (EA/mm²) | ASPECT RATIO OF CARBIDES (MAJOR AXIS/MINOR AXIS) | | | | | |
| 1 | A | 16.3 | 0.0 | 83.7 | 0.0 | 0.0 | $7.2*10^6$ | 1.4 | 7.4 | 6.4 | 0.5 | 723 | 622 |
| 2 | A | 20.5 | 0.0 | 79.5 | 0.0 | 0.0 | $10.3*10^6$ | 1.3 | 8.3 | 7.5 | 0.5 | 741 | 634 |
| 3 | A | 14.7 | 0.0 | 85.3 | 0.0 | 0.0 | $11.4*10^6$ | 1.3 | 9.2 | 6.6 | 0.5 | 695 | 611 |
| 4 | A | 12.3 | 0.0 | 87.7 | 0.0 | 0.0 | $9.1*10^6$ | 1.8 | 7.1 | 8.5 | 0.5 | 733 | 651 |
| 5 | A | 17.8 | 0.0 | 82.2 | 0.0 | 0.0 | $8.8*10^6$ | 1.3 | 14.1 | 7.9 | 0.5 | 688 | 591 |
| 6 | A | 21.7 | 0.0 | 78.3 | 0.0 | 0.0 | $11.7*10^6$ | 1.4 | 15.2 | 11.7 | 0.5 | 661 | 568 |
| 7 | A | 11.1 | 0.0 | 88.9 | 0.0 | 0.0 | $12.4*10^6$ | 1.5 | 10.1 | 6.8 | 0.5 | 761 | 664 |
| 8 | A | 43.2 | 0.0 | 56.8 | 0.0 | 0.0 | $5.1*10^6$ | 1.4 | 9.4 | 14.1 | 0.0 | 664 | 559 |
| 9 | A | 38.0 | 0.0 | 62.0 | 0.0 | 0.0 | $3.4*10^6$ | 1.6 | 8.7 | 13.5 | 0.5 | 661 | 562 |
| 10 | B | 15.4 | 0.0 | 84.6 | 0.0 | 0.0 | $6.6*10^6$ | 1.4 | 11.2 | 10.2 | 0.5 | 718 | 638 |
| 11 | C | 11.9 | 0.0 | 88.1 | 0.0 | 0.0 | $10.1*10^6$ | 1.6 | 8.5 | 8.9 | 1.0 | 789 | 714 |
| 12 | D | 12.4 | 0.0 | 87.6 | 0.0 | 0.3 | $9.4*10^6$ | 1.6 | 8.1 | 9.4 | 1.0 | 746 | 643 |
| 13 | E | 21.8 | 4.6 | 73.6 | 0.0 | 0.0 | $7.9*10^6$ | 1.3 | 9.8 | 8.4 | 0.0 | 658 | 566 |
| 14 | A | 41.7 | 19.4 | 38.9 | 0.0 | 0.0 | $0.7*10^6$ | 1.4 | 12.1 | 19.7 | 0.5 | 611 | 484 |
| 15 | A | 22.4 | 0.0 | 77.6 | 0.0 | 0.0 | $6.4*10^6$ | 2.4 | 6.7 | 10.6 | 1.5 | 756 | 713 |
| 16 | A | 0.0 | 0.0 | 32.0 | 68.0 | 0.0 | $12.8*10^6$ | 1.8 | 8.1 | - | 3.0 | 859 | 708 |
| 17 | A | 60.2 | 15.1 | 24.7 | 0.0 | 0.0 | $2.1*10^6$ | 1.5 | 7.1 | 17.6 | 1.5 | 597 | 462 |
| is | A | 24.3 | 9.6 | 66.1 | 0.0 | 0.0 | $2.1*10^6$ | 1.3 | 14.3 | 16.8 | 1.0 | 632 | 498 |
| 19 | A | 19.7 | 11.2 | 69.1 | 0.0 | 0.0 | $2.8*10^6$ | 1.4 | 13.3 | 16.8 | 1.0 | 644 | 523 |
| 20 | A | 31.2 | 5.4 | 63.4 | 0.0 | 0.0 | $1.4*10^6$ | 1.4 | 8.4 | 20.3 | 1.5 | 579 | 435 |

| SPECIMEN No. | STEEL TYPE | MICROSTRUCTURE FRACTION (VOLUME%) | | | | | CARBIDE IN BAINITE | | AVERAGE SIZE OF B PACKET ($\mu$m) | AVERAGE SIZE OF F GRAINS ($\mu$m) | BENDING WORK ABILITY (R/t) | TENSILE STRENGTH (MPa) | YIELD STRENGTH (MPa) |
|---|---|---|---|---|---|---|---|---|---|---|---|---|---|
| | | F | P | B | M | R -$\gamma$ | NUMBER OF DENSITY OF CARBIDES (EA/mm$^2$) | ASPECT RATIO OF CARBIDES (MAJOR AXIS/ MINOR AXIS) | | | | | |
| 21 | F | 34.2 | 0.0 | 65.8 | 0.0 | 0.0 | $0.1*10^6$ | 1.3 | 8.8 | 8.8 | 0.5 | 458 | 319 |
| 22 | G | 8.1 | 4.3 | 87.6 | 0.0 | 0.0 | $14.3*10^6$ | 1.6 | 7.9 | 9.5 | 2.5 | 819 | 732 |
| 23 | H | 18.2 | 12.4 | 69.4 | 0.0 | 0.0 | $4.8*10^6$ | 1.4 | 8.3 | 6.9 | 1.5 | 634 | 504 |
| 24 | I | 21.4 | 13.8 | 64.8 | 0.0 | 0.0 | $3.7*10^6$ | 1.5 | 9.5 | 10.1 | 1.5 | 618 | 496 |
| 25 | J | 15.4 | 0.0 | 84.6 | 0.0 | 0.0 | $8.9*10^6$ | 2.9 | 10.6 | 8.9 | 2.0 | 796 | 734 |
| 26 | K | 14.7 | 0.0 | 85.3 | 0.0 | 0.0 | $9.1*10^6$ | 2.5 | 8.1 | 7.6 | 2.5 | 834 | 755 |

As illustrated in Tables 1 to 3, it can be understood that specimens satisfying both the alloy composition and process conditions of the present disclosure satisfy a yield strength (YS) of 550 MPa or more, a tensile strength (TS) of 650 MPa or more, and bending workability (R/t) of 1.0 or less, while specimens not satisfying any one or more of the alloy composition or process conditions of the present disclosure do not simultaneously satisfy a yield strength (YS) of 550 MPa or more, a tensile strength (TS) of 650 MPa or more, and bending workability (R/t) of 1.0 or less.

While example embodiments have been shown and described above, it will be apparent to those skilled in the art that modifications and variations could be made without departing from the scope of the present disclosure as defined by the appended claims.

**Claims**

1. A hot-rolled steel sheet, comprising by wt%:

   0.1 to 0.25% of carbon (C), 0.2 to 2.0% of manganese (Mn), 0.3% or less of silicon (Si), 0.05% or less of aluminum (Al), 0.05% or less of phosphorous (P), 0.03% or less of sulfur (S), 0.01% or less of nitrogen (N), 0.005 to 0.05% of titanium (Ti), 0.0005 to 0.005% of boron (B), 0.01% or less of niobium (Nb), 0.1% or less of molybdenum (Mo), 0.1% or less of vanadium (V), and a balance of iron (Fe) and inevitable impurities, including 55 to 90% of bainite and 10 to 45% of ferrite as a microstructure, by volume fraction,
   wherein the number of carbides per unit area having a major axis length of 25 to 500 nm from among carbides present in the bainite is $3*10^6$ /mm$^2$ or more, and
   an average aspect ratio (major axis/minor axis) of the carbides present in the bainite is 2.0 or less.

2. The hot-rolled steel sheet of claim 1, wherein the hot-rolled steel sheet comprises, by volume fraction, one or more of 10% or less (including 0%) of pearlite, 1% or less (including 0%) of martensite, and 1% or less (including 0%) of retained austenite as a microstructure.

3. The hot-rolled steel sheet of claim 1, wherein an average packet size of the bainite is 50 to 200% of an average grain size of the ferrite.

4. The hot-rolled steel sheet of claim 1, wherein the hot-rolled steel sheet satisfies the following Relational expression 1,

   $$[\text{Relational expression 1}]$$

   $$30*[Ti]+100*[Nb]+5*[V] \le 1.65$$

   in Relational expression 1, [Ti], [Nb], and [V] refer to contents (wt%) of titanium (Ti), niobium (Nb), and vanadium (V) included in the hot-rolled steel sheet, respectively.

5. The hot-rolled steel sheet of claim 1, wherein the hot-rolled steel sheet further comprises, by wt%, 0.2% or less of chromium (Cr).

6. The hot-rolled steel sheet of claim 1, wherein the hot-rolled steel sheet has bending workability (R/t) of 1.0 or less.

7. The hot-rolled steel sheet of claim 1, wherein the hot-rolled steel sheet has a yield strength (YS) of 550 MPa or more, and a tensile strength (TS) of 650 MPa or more.

8. The hot-rolled steel sheet of claim 1, wherein the hot-rolled steel sheet has a thickness of 3 mm or less (excluding 0 mm).

9. A hot-rolled plated steel sheet, comprising:

   a base steel sheet and a plating layer formed on at least one surface of the base steel sheet,
   wherein the base steel sheet is any one hot-rolled steel sheet selected from claims 1 to 8,
   wherein the plating layer is any one plating layer selected from zinc, aluminum, a zinc alloy, and an aluminum alloy.

10. A method for manufacturing a hot-rolled steel sheet, comprising:

a slab heating operation of heating a slab including by wt%, 0.1 to 0.25% of carbon (C), 0.2 to 2.0% of manganese (Mn), 0.3% or less of silicon (Si), 0.05% or less of aluminum (Al), 0.05% or less of phosphorous (P), 0.03% or less of sulfur (S), 0.01% or less of nitrogen (N), 0.005 to 0.05% of titanium (Ti), 0.0005 to 0.005% of boron (B), 0.01% or less of niobium (Nb), 0.1% or less of molybdenum (Mo), 0.1% or less of vanadium (V), and a balance of iron (Fe) and inevitable impurities;

a hot rolling operation of hot rolling the heated slab at a rolling finish temperature ($T_{fm}$) satisfying the following Relational expression 3, to provide a steel sheet;

a first cooling operation of cooling the hot-rolled steel sheet at a first cooling rate to a first cooling end temperature ($T_1$) satisfying the following Relational expression 4;

a second cooling operation of cooling the first-cooled steel sheet at a second cooling rate of 50 to 500°C/s, faster than the first cooling rate to a second cooling end temperature ($T_2$) satisfying the following Relational expression 5;

a third cooling operation of cooling the second-cooled steel sheet at a third cooling rate, slower than the second cooling rate to a third cooling end temperature ($T_3$) satisfying the following Relational expression 6;

a coiling operation of coiling the third-cooled hot-rolled steel sheet at the third cooling end temperature ($T_3$) ; and

a heat treatment operation of heat treating the coiled steel sheet in a temperature range of 450 to 720°C,

$$\mathrm{[Relational\ expression\ 3]}$$

$$\mathrm{T_{fm}(^{\circ}C) \geq 800+3000*[Ti]+10000*[Nb]-20*t^{\wedge(1/2)}}$$

in Relational expression 3, [Ti] and [Nb] refer to contents (wt%) of titanium (Ti) and niobium (Nb) included in the slab, respectively, and t refers to a thickness (mm) of the hot-rolled steel sheet.

$$\mathrm{[Relational\ expression\ 4]}$$

$$\mathrm{T_{fm}(^{\circ}C)-80^{\circ}C \leq T_1(^{\circ}C) \leq T_{fm}(^{\circ}C)-5^{\circ}C}$$

in Relational expression 4, $T_{fm}$ refers to a rolling finish temperature ($T_{fm}$) of the hot rolling operation.

$$\mathrm{[Relational\ expression\ 5]}$$

$$\mathrm{T_2(^{\circ}C) \leq 750-270*[C]-90*[Mn]}$$

in Relational expression 5, [C] and [Mn] refer to contents (wt%) of carbon (C) and manganese (Mn) included in the slab, respectively.

$$\mathrm{[Relational\ expression\ 6]}$$

$$\mathrm{540-423*[C]-30.4*[Mn] \leq T_3(^{\circ}C) < T_2(^{\circ}C)}$$

in Relational expression 6, $T_2$ refers to the second cooling end temperature (T2) of the second cooling operation, and [C] and [Mn] refer to contents of carbon (C) and manganese (Mn) included in the slab, respectively (by weight %).

11. The method for manufacturing a hot-rolled steel sheet of claim 10, wherein the first cooling rate is 5 to 50°C/s, wherein the third cooling rate is 5 to 50°C/s.

12. The method for manufacturing a hot-rolled steel sheet of claim 10, wherein the slab satisfies the following Relational expression 1,

[Relational expression 1]

$$30*[Ti]+100*[Nb]+5*[V] \leq 1.65$$

in Relational expression 1, [Ti], [Nb], and [V] refer to contents (wt%) of titanium (Ti), niobium (Nb), and vanadium (V) included in the slab, respectively.

13. The method for manufacturing a hot-rolled steel sheet of claim 10, wherein the slab further comprises 0.2% or less of chromium (Cr).

14. The method for manufacturing a hot-rolled steel sheet of claim 10, wherein a thickness of the hot-rolled steel sheet is 3 mm or less.

15. A method for manufacturing a hot-rolled plated steel sheet, comprising:

an operation of preparing a base steel sheet; and
a plating operation of forming a plating layer on at least one surface of the base steel sheet, by any one selected from a hot-dip plating method, an electroplating method, and a plasma method,
wherein the base steel sheet is provided by any one manufacturing method selected from claims 10 to 14,
wherein the plating layer is any one plating layer selected from zinc, aluminum, a zinc alloy, and an aluminum alloy.

[FIG. 1]

5 μm

## INTERNATIONAL SEARCH REPORT

| International application No. |
|---|
| **PCT/KR2021/016320** |

**A. CLASSIFICATION OF SUBJECT MATTER**

**C22C 38/00**(2006.01)i; **C22C 38/02**(2006.01)i; **C22C 38/04**(2006.01)i; **C22C 38/06**(2006.01)i; **C22C 38/12**(2006.01)i; **C22C 38/14**(2006.01)i; **C21D 9/46**(2006.01)i; **C21D 8/02**(2006.01)i; **C23C 2/06**(2006.01)i

According to International Patent Classification (IPC) or to both national classification and IPC

**B. FIELDS SEARCHED**

Minimum documentation searched (classification system followed by classification symbols)

C22C 38/00(2006.01); B21B 1/22(2006.01); C21D 8/02(2006.01); C21D 9/46(2006.01); C22C 38/04(2006.01); C22C 38/14(2006.01); C22C 38/22(2006.01); C22C 38/50(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 열연강판(hot rolled steel sheet), 베이나이트(bainite), 페라이트(ferrite), 탄화물(carbide), 도금(plating)

**C. DOCUMENTS CONSIDERED TO BE RELEVANT**

| Category* | Citation of document, with indication, where appropriate, of the relevant passages | Relevant to claim No. |
|---|---|---|
| A | KR 10-2018-0088707 A (NIPPON STEEL & SUMITOMO METAL CORPORATION) 06 August 2018 (2018-08-06)<br>See paragraphs [0157]-[0160], claims 1-3 and 6 and tables 1-2. | 1-15 |
| A | KR 10-2015-0000897 A (NIPPON STEEL & SUMITOMO METAL CORPORATION) 05 January 2015 (2015-01-05)<br>See claims 1-3 and 6 and table 1. | 1-15 |
| A | KR 10-2018-0068099 A (POSCO) 21 June 2018 (2018-06-21)<br>See claims 1 and 5 and tables 1-4. | 1-15 |
| A | KR 10-2016-0041850 A (JFE STEEL CORPORATION) 18 April 2016 (2016-04-18)<br>See paragraphs [0123]-[0131] and claims 1-10. | 1-15 |
| A | JP 2005-307339 A (JFE STEEL K.K.) 04 November 2005 (2005-11-04)<br>See claims 1-6 and tables 1-3. | 1-15 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 February 2022** | **21 February 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

INTERNATIONAL SEARCH REPORT
Information on patent family members

International application No.

**PCT/KR2021/016320**

| Patent document cited in search report | | | Publication date (day/month/year) | Patent family member(s) | | | Publication date (day/month/year) |
|---|---|---|---|---|---|---|---|
| KR | 10-2018-0088707 | A | 06 August 2018 | BR | 112018012681 | A2 | 04 December 2018 |
| | | | | CN | 108495943 | A | 04 September 2018 |
| | | | | CN | 108495943 | B | 28 May 2021 |
| | | | | EP | 3434801 | A1 | 30 January 2019 |
| | | | | EP | 3434801 | B1 | 08 September 2021 |
| | | | | JP | 6288394 | B2 | 07 March 2018 |
| | | | | JP | WO2017-164346 | A1 | 29 March 2018 |
| | | | | KR | 10-2099769 | B1 | 10 April 2020 |
| | | | | MX | 2018007364 | A | 15 August 2018 |
| | | | | TW | 201739930 | A | 16 November 2017 |
| | | | | TW | I611027 | B | 11 January 2018 |
| | | | | US | 11035021 | B2 | 15 June 2021 |
| | | | | US | 2019-0003009 | A1 | 03 January 2019 |
| | | | | WO | 2017-164346 | A1 | 28 September 2017 |
| KR | 10-2015-0000897 | A | 05 January 2015 | BR | 112014024879 | B1 | 22 January 2019 |
| | | | | CN | 104364408 | A | 18 February 2015 |
| | | | | CN | 104364408 | B | 26 October 2016 |
| | | | | EP | 2835440 | A1 | 11 February 2015 |
| | | | | EP | 2835440 | B1 | 29 August 2018 |
| | | | | ES | 2699996 | T3 | 13 February 2019 |
| | | | | IN | 8590DEN2014 | A | 22 May 2015 |
| | | | | JP | 5339005 | B1 | 13 November 2013 |
| | | | | JP | WO2013-150669 | A1 | 17 December 2015 |
| | | | | KR | 10-2016-0121599 | A | 19 October 2016 |
| | | | | MX | 2014011901 | A | 08 May 2015 |
| | | | | MX | 366776 | B | 23 July 2019 |
| | | | | PL | 2835440 | T3 | 28 February 2019 |
| | | | | US | 10351942 | B2 | 16 July 2019 |
| | | | | US | 2015-0140358 | A1 | 21 May 2015 |
| | | | | WO | 2013-150669 | A1 | 10 October 2013 |
| KR | 10-2018-0068099 | A | 21 June 2018 | CN | 110088337 | A | 02 August 2019 |
| | | | | CN | 110088337 | B | 24 September 2021 |
| | | | | EP | 3556889 | A1 | 23 October 2019 |
| | | | | JP | 2020-509172 | A | 26 March 2020 |
| | | | | JP | 6945628 | B2 | 06 October 2021 |
| | | | | KR | 10-1899670 | B1 | 17 September 2018 |
| | | | | US | 2020-0080167 | A1 | 12 March 2020 |
| | | | | WO | 2018-110853 | A1 | 21 June 2018 |
| | | | | WO | 2018-110853 | A8 | 04 October 2018 |
| KR | 10-2016-0041850 | A | 18 April 2016 | CN | 105102662 | A | 25 November 2015 |
| | | | | EP | 2987887 | A1 | 24 February 2016 |
| | | | | EP | 2987887 | B1 | 11 September 2019 |
| | | | | JP | 2014-205889 | A | 30 October 2014 |
| | | | | JP | 2014-205890 | A | 30 October 2014 |
| | | | | JP | 5867444 | B2 | 24 February 2016 |
| | | | | JP | 5870955 | B2 | 01 March 2016 |
| | | | | MX | 2015014437 | A | 03 February 2016 |
| | | | | US | 2016-0076124 | A1 | 17 March 2016 |
| | | | | WO | 2014-171063 | A1 | 23 October 2014 |
| JP | 2005-307339 | A | 04 November 2005 | JP | 4692018 | B2 | 01 June 2011 |

Form PCT/ISA/210 (patent family annex) (July 2019)

**INTERNATIONAL SEARCH REPORT**
Information on patent family members

International application No.

**PCT/KR2021/016320**

| Patent document cited in search report | Publication date (day/month/year) | Patent family member(s) | Publication date (day/month/year) |
|---|---|---|---|
| | | | |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020050113247
- JP 2002322542 A
- JP 2006161112 A
- KR 1020060033489
- JP 2005298967 A
- US 20050155673 A
- EP 1396549 A